# EUROPÄISCHE PATENTSCHRIFT

(11) **EP 3 981 488 B1**
(45) Veröffentlichungstag und Bekanntmachung des Hinweises auf die Patenterteilung: **06.12.2023**
(21) Anmeldenummer: 21201093.8
(22) Anmeldetag: 06.10.2021
(51) Int. Cl.: B01D 29/68, B01D 33/50

(54) **VORRICHTUNG ZUR REINIGUNG VON FILTERTÜCHERN**
DEVICE FOR CLEANING FILTER CLOTH
DISPOSITIF DE NETTOYAGE DE TISSUS DE FILTRATION

(30) Priorität: 06.10.2020 DE 202020105728 U
(43) Veröffentlichungstag der Anmeldung: 13.04.2022
(73) Patentinhaber: Mecana Umwelttechnik GmbH, 8864 Reichenburg (CH)
(72) Erfinder: GRABBE, Ulrich, 8863 Buttikon (CH); TRAN, Anh Kiet, 8733 Eschenbach (CH)
(74) Vertreter: Patentanwaltskanzlei Vièl & Wieske PartGmbB

(56) Entgegenhaltungen:
- US-A1- 2005 139 557
- US-A1- 2013 048 553
- US-A1- 2013 105 415
- US-B1- 10 195 549

## Beschreibung

Die Erfindung betrifft eine Vorrichtung zur Reinigung von Filtertüchern, wobei die Vorrichtung einen Absaugbalken und eine Saugplatte umfasst, wobei die Saugplatte und der Absaugbalken mittels Rastverbindungen lösbar verbindbar sind.

Vorrichtungen zur Reinigung von Filtertüchern werden beispielweise bei der Abwasserreinigung mit Polfiltern eingesetzt. Dabei ist das Filtertuch als Polstoff ausgebildet. Dieser besteht aus einem Flausch-, Plüsch- oder Samtgewebe, das ein relativ großmaschiges Stützgewebe und einen beispielsweise in W-Bindung eingewirkten Flor aus Florfäden aufweist. Dabei liegen die Florfäden im Filtrierbetrieb an der Anströmseite des Filtertuches an, und ihre Länge, Steifigkeit und Dichte sind so bemessen, dass die anströmende Flüssigkeit in eine zum Stützgewebe annähernd parallele Position umgelegt wird und dadurch mehrlagig übereinanderliegenden Florfäden zahlreiche enge, verwinkelte und mehrfach gekrümmte Durchflusskanäle bilden, in denen auch Feststoffpartikel, deren Größe kleiner als die lichte Weite der Durchflusskanäle ist, teils mechanisch und teils durch Absorption festgehalten werden können.

Der Durchflusswiderstand des Filtertuchs ist relativ hoch und nimmt mit zunehmender Verstopfung der Durchflusskanäle rasch zu. Das Filtertuch muss daher in relativ kurzen Zeitabständen gereinigt werden. Dies geschieht in der Regel durch Rückspülen, d.h. durch Hindurchleiten von Flüssigkeit, wie beispielsweise Frischwasser oder Filtrat, durch das Filtertuch in zu der Filterrichtung entgegengesetzter Richtung.

Beim Rückspülen von Polstoff sind die Florfäden einer vom Stützgewerbe weg gerichteten Flüssigkeitsströmung ausgesetzt und werden dadurch relativ zum Stützgewebe aufgerichtet und stehen dann weitgehend zueinander und zur Strömungsrichtung parallel, wodurch sich das Volumen der Florschicht stark vergrößert und die zwischen den Florfäden bestehenden Durchflusskanäle geöffnet und begradigt werden. Dadurch wird einerseits der Durchflusswiderstand für die Rückspülflüssigkeit verringert, sodass diese mit hoher Geschwindigkeit zwischen den Florfäden durchströmen kann, und andererseits werden die zuvor in den Durchflusskanälen mechanisch blockierten Feststoffpartikel freigegeben, sodass sie von der Rückspülflüssigkeit unter Überwindung der Absorptionskräfte abgelöst und weggespült werden können.

Das Aufrichten und Abreinigen der Florfäden wird dabei durch speziell geformte Saugplatten, die am vorderen Ende der Absaugbalken in Kontakt mit den Polstoff stehen, unterstützt. Solche Saugplatten sind beispielsweise aus der US 10,195,549 B1 bekannt.

Die US 2005/139557 A1 beschreibt ein Filtertuch aus langflorigen Faserbündeln, das als Tertiärfilter in einem Abwasseraufbereitungsverfahren eingesetzt wird. Die Rückspülung des Filters kann durch einen rotierenden Saugkopf erfolgen, der das Filtertuch nicht berührt. Durch eine Kombination aus Gegenstrom und horizontaler Strömung werden mitgerissene Feststoffe vom Filtertuch abgelöst.

Die US 2013/048553 A1 beschreibt eine Saugvorrichtung für einen Gewebefilter und eine Filtriervorrichtung zur Flüssigkeitsfiltration mit dieser. Ein Hauptsaugschlitz und ein Nebensaugschlitz sind durch eine Trennwand getrennt parallel zueinander angeordnet. Dadurch werden die Florfäden beim Durchlaufen des Nebensaugschlitzes verzögert aufgerichtet und schwanken und werden dann im Hauptsaugschlitz schnell aufgerichtet. Dadurch kann der Rückspüleffekt weiter verbessert werden.

Die US 2013/105415 betrifft einen Rückspülkopf für eine Gewebefilterscheibe. Der Rückspülkopf umfasst mindestens einen Ansaugschlitz, der so gestaltet ist, dass Flüssigkeiten und Feststoffe von außerhalb der Außenfläche in den inneren Hohlraum eindringen können. Der Rückspülkopf weist Abdeckungen aus zylindrischen Stangen auf, die durch Schweißen, Löten, Kleben, Rastverbindungen oder Schnappverbindungen an dem Rückspülkopf verbunden werden können.

Der Erfindung liegt die Aufgabe zugrunde, Vorrichtungen zur Reinigung von Filtertüchern zu optimieren.

Die Aufgabe wird bei Vorrichtungen zur Reinigung von Filtertüchern gemäß dem Oberbegriff des Anspruchs 1 dadurch gelöst, dass die Saugplatte Rastnasen aufweist und der Absaugbalken Aussparungen zum Hintergreifen der Rastnasen der Saugplatte aufweist..

Bei der Reinigung von Filtertüchern wird vor allem der mit dem Filterstoff direkt in mechanischem Kontakt stehende vordere Teil des Absaugbalkens, die so genannte Saugplatte, über die Zeit abgenutzt. Der Filterstoff kann beispielsweise ein Polstoff sein. Vorteilhaft lässt sich die Saugplatte durch die Befestigungsmittel schnell und einfach auswechseln. Die Saugplatte kann dabei an den jeweiligen Filterstoff angepasst sein und je nach Filterstoff ausgewechselt werden.

Vorteilhaft lässt sich über die Rastverbindungen die Saugplatte schnell und einfach mit dem Absaugbalken verbinden. Um die Saugplatte zu wechseln, lassen sich diese Rastverbindungen schnell lösen.

Schließlich ist es erfindungsgemäß, dass der Absaugbalken und/oder die Saugplatte aus Kunststoff bestehen.

Nachfolgend wird ein Ausführungsbeispiel der Erfindung anhand von Zeichnungen näher beschrieben.

Es zeigen
- Fig.1: eine perspektivische Ansicht der erfindungsgemäßen Saugplatte,
- Fig. 2: eine weitere perspektivische Ansicht der Saugplatte aus Fig.1,
- Fig. 3: eine Vorderansicht des erfindungsgemäßen Absaugbalkens,
- Fig. 4: eine perspektivische Ansicht des Absaugbalkens aus Fig. 3.

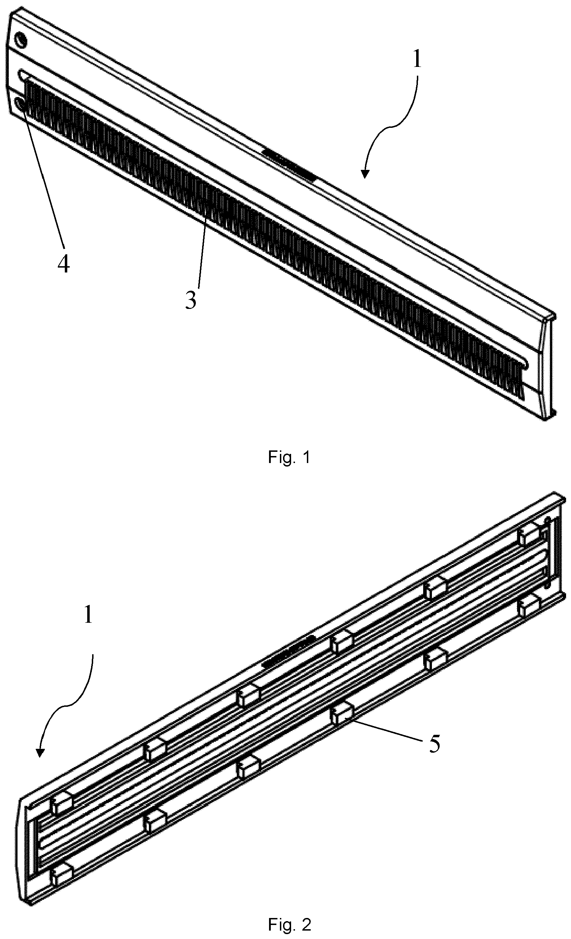

Die Figuren 1 und 2 zeigen eine schematische Darstellung der erfindungsgemäßen Saugplatte 1. Über die Ansaugöffnungen 3 kann der Polstoff des Polfilters angesaugt werden. Die Saugplatte 1 lässt sich über die Öffnung 4 mit dem Absaugbalken 2 verbinden. Zusätzlich kann die Saugplatte 1 mittels der Rastverbindung 5 mit dem Absaugbalken 2 verbunden werden.

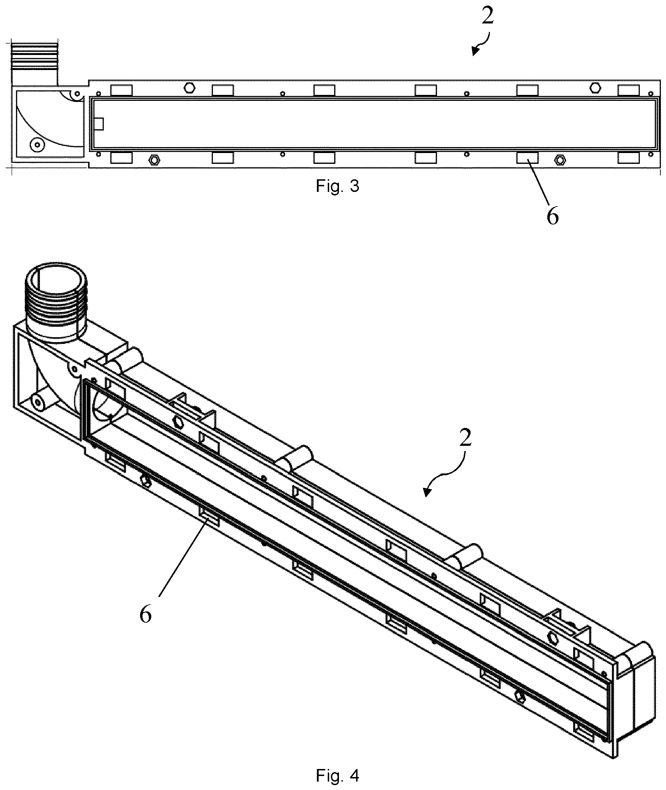

Die Figuren 3 und 4 zeigen eine schematische Darstellung des erfindungsgemäßen Absaugbalkens 2. Der Absaugbalken 2 besitzt Aussparungen 6 zum Hintergreifen der Rastnasen 5 der Saugplatte 1. Dadurch kann die Saugplatte 1 mit dem Absaugbalken 2 lösbar verbunden werden.

## Patentansprüche

1. Vorrichtung zur Reinigung von Filtertüchern, wobei die Vorrichtung einen Absaugbalken (2) und eine Saugplatte (1) umfasst, wobei die Saugplatte (1) und der Absaugbalken (2) mittels Rastverbindungen (4,5) lösbar verbindbar sind, **dadurch gekennzeichnet, dass** die Saugplatte (1) Rastnasen (5) aufweist und der Absaugbalken (2) Aussparungen (6) zum Hintergreifen der Rastnasen (5) der Saugplatte (1) aufweist.

2. Vorrichtung gemäß Anspruch 1, **dadurch gekennzeichnet, dass** der Absaugbalken (2) und/oder die Saugplatte (1) aus Kunststoff bestehen.

## Claims

1. Device for cleaning filter cloths, the device comprising a suction bar (2) and a suction plate (1), the suction plate (1) and the suction bar (2) being detachably connectable by means of locking connections (4, 5), **characterised in that** the suction plate (1) has locking lugs (5) and the suction bar (2) has recesses (6) for engaging behind the locking lugs (5) of the suction plate (1).

2. Device according to claim 1, **characterised in that** the suction bar (2) and/or the suction plate (1) are made of plastic.

## Revendications

1. Dispositif de nettoyage de tissus filtrants, le dispositif comprenant une poutre d'aspiration (2) et une plaque d'aspiration (1), la plaque d'aspiration (1) et la poutre d'aspiration (2) pouvant être reliées de manière amovible au moyen de liaisons par encliquetage (4, 5), **caractérisé en ce que** la plaque d'aspiration (1) présente des ergots d'encliquetage (5) et la poutre d'aspiration (2) présente des évidements (6) pour s'engager derrière les ergots d'encliquetage (5) de la plaque d'aspiration (1).

2. Dispositif selon la revendication 1, **caractérisé en ce que** la poutre d'aspiration (2) et/ou la plaque d'aspiration (1) sont en matière plastique.
